# EUROPÄISCHE PATENTSCHRIFT

(11) **EP 1 649 670 B1**
(45) Veröffentlichungstag und Bekanntmachung des Hinweises auf die Patenterteilung: **15.12.2010**
(21) Anmeldenummer: 04741297.8
(22) Anmeldetag: 28.07.2004
(51) Int. Cl.: H04W 48/18

(54) **Verfahren zur gemeinsamen Nutzung eines Funkzugangsnetzwerkes durch mehrere Mobilfunkanbieter**
Method for several mobile radio suppliers to jointly use a radio access network
Procédé pour l'utilisation conjointe d'un réseau d'accés radio par plusieurs fournisseurs de téléphonie mobile

(30) Priorität: 29.07.2003 DE 10334872
(43) Veröffentlichungstag der Anmeldung: 26.04.2006
(60) Teilanmeldung: 10011476.8
(73) Patentinhaber: Telekom Deutschland GmbH, 53184 Bonn (DE)
(72) Erfinder: KLATT, Axel, 50996 Köln (DE)
(74) Vertreter: Riebling, Peter
(86) Internationale Anmeldenummer: PCT/EP2004/008430
(87) Internationale Veröffentlichungsnummer: WO 2005/013583

(56) Entgegenhaltungen:
- VILLAGE, WORRAL, CRAWFORD: "3G Shared Infrastructure" 3G MOBILE COMMUNICATION TECHNOLOGIES, CONFERENCE PUBLICATION NO. 489, 8. Mai 2002 (2002-05-08), - 10. Mai 2002 (2002-05-10) Seiten 10-16, XP002317359
- "digital cellular telecommunications system (Phase 2+); Universal Mobile Telecommunications System (UMTS); Service aspects and requirements for network sharing (3GPP TR 22.951 version 6.1.0 Release 6)" ETSI TECHNICAL REPORT, 1. März 2003 (2003-03-01), Seiten 1-20, XP002317360 SOPHIA ANTIPOLIS, FRANCE

## Beschreibung

Die vorliegende Erfindung betrifft ein Verfahren zur gemeinsamen Nutzung des Funkzugangsnetzwerkes eines Mobilfunksystems durch mehrere Anbieter von Mobilfunkdienstleistungen. Aus unterschiedlichen Gründen (beispielsweise finanziellen oder regulatorischen) sind heutzutage Mobilfunkanbieter gezwungen, Teile ihrer Infrastruktur zur Bereitstellung von Mobilfunkleistungen effizient zu nutzen, gemeinsam zu betreiben bzw. zu teilen.

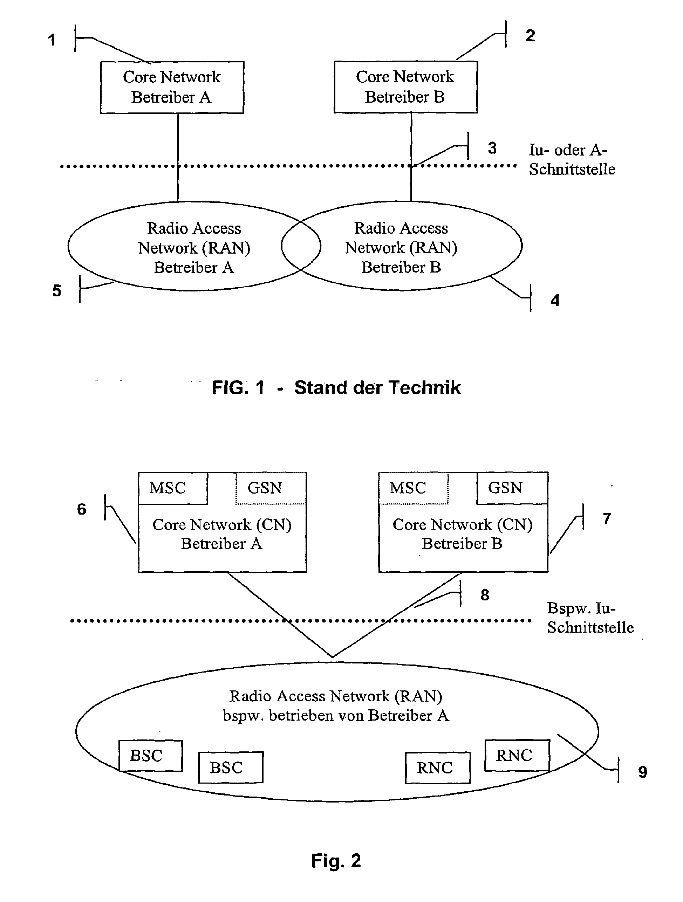

Stand der Technik sind heute sogenannte National-Roaming-Abkommen, bei denen die Mobilfunkteilnehmer des einen Mobilfunkbetreibers sowohl das Funkzugangsnetz als auch das Kernnetz des jeweiligen Roaming-Partners nutzen dürfen. Die Verfahren zur Bereitstellung dieser Roamingleistungen basieren größtenteils auf standardisierten Verfahren, beispielsweise nach 3GPP-Standards [www.3gpp.org]. Weiterhin sind heute Funkzugangs- und Kernnetz eines Mobilfunkanbieters derart miteinander verbunden, dass die Auswahl eines anderen Kernnetzes, beispielsweise eines Mobile Switching Centers (MSC) zur Erbringung von Circuit Switched (CS)-Verbindungen, beispielsweise für Sprachverbindungen, oder eines anderen Serving GPRS Support Node (SGSN) zur Erbringung von Packet Switched (PS) Verbindungen, beispielsweise Internetzugang, nicht möglich ist. Die dem heutigen Stand der Technik entsprechende prinzipielle Architektur eines Mobilfunknetzes ist in Figur 1 dargestellt. Die Funkzugangsnetze (Radio Access Network - RAN) 4,5 und die jeweiligen Kernnetze (Core Net - CN) 1,2 der Mobilfunkbetreiber A und B existieren bei beiden (oder mehreren) Mobilfunkbetreibern parallel nebeneinander. Existieren Roaming-Vereinbarungen zwischen den Mobilfunkbetreibern, so können die Mobilfunkteilnehmer des Betreibers A beispielsweise in Gebieten ohne Mobilfunkversorgung durch Betreiber A die Mobilfunkleistungen des Betreibers B über dessen Funkzugangs- und Kernnetz 4,2 nutzen. Hierbei werden diese Leistungen jedoch komplett vom Betreiber B für den Mobilfunkteilnehmer von A erbracht. Nachteil dieser Situation ist u.a., dass die Abrechnung der erbrachten Mobilfunkleistungen zwischen Betreiber A und B durchgeführt werden muss, aber auch dass gegebenenfalls Betreiber B nicht alle Dienste des Betreibers A anbieten kann. Oftmals sind nationale Roaming-Vereinbarungen zwischen Mobilfunkbetreibern geschlossen, die nicht die gleiche Marktposition haben und werden daher gegebenenfalls nur einseitig durchgeführt.

Der Artikel von Village, Worral, Crawford: "3G Shared Infrastructure", 3G Mobile Communication Technologies, Conference Publication No. 489, 8.-10. Mai 2002, Seiten 10-16, XP002317359, beschreibt ein Verfahren zur Bereitstellung bzw. Teilung oder gemeinsamen Nutzung eines Mobilfunk-Funkzugangsnetzwerkes durch mehrere Mobilfunkanbieter, bei dem ein einziges Funkzugangsnetz durch mehrere Mobilfunkanbieter gemeinsam genutzt wird, wobei zur Unterscheidung der Kernnetze der verschiedenen Mobilfunkanbieter die jeweilige Identität der Netzbetreiber, PLMN Identity, im Funkzugangsnetzwerk dem Mobilfunkteilnehmer über die Aussendung von mehr als einer Mobilfunkbetreiberkennung auf einem Organisationskanal bereitgestellt wird.

Die Technische Schrift "Digital cellular communication (phase 2+); Universal Mobile Telecommunication System (UMTS); Service aspects and requirements for network sharing, 3GPP TR 22.951, Version 6.1.0, Release 6, ETSI Technical report, 1. März 2003, Seiten 1-20, XP002317360, beschreibt ebenfalls die Möglichkeit der gemeinsamen Nutzung von Netzwerkelementen, insbesondere des Funkzugangsnetzes, durch mehrere Netzbetreiber.

Aufgabe der vorliegenden Erfindung ist es daher, eine bessere Ausnutzung der Infrastruktur von Mobilfunknetzen unterschiedlicher Betreiber zu ermöglichen, um so einerseite die Wirtschaftlichkeit zu steigern und andererseits Anforderungen an den Umweltschutz besser gerecht zu werden.

Diese Aufgabe wird durch die Merkmale der Ansprüche 1 und 19 gelöst, auf welche hiermit bezug genommen wird.

Bevorzugte und vorteilhafte Weiterbildungen der Erfindung sind in den abhängigen Ansprüchen 2 bis 18 und 20 bis 22 enthalten, auf die hiermit bezug genommen wird.

Mit dem erfindungsgemäßen Verfahren ergibt sich die Möglichkeit, ein gemeinsames Funkzugangsnetz für verschiedene Mobilfunkanbieter zugänglich zu machen, indem ein Mobilfunkteilnehmer aus mehreren, von einem gemeinsamen Funkzugangsnetzwerk abgestrahlten vorzugsweise PLMN IDs eine auswählt und über das zugehörige Kernnetz des ausgewählten Mobilfunkbetreibers Dienste (CS oder PS) in Anspruch nimmt. Die vorliegende Erfindung stellt eine wesentliche Verbesserung des Stands der Technik dar, da sie es ermöglicht, ein gemeinsames Funkzugangsnetz (Radio Access Network - RAN) zu benutzen und separate Kernnetze (Core Networks - CN) für die verschiedenen Mobilfunkbetreiber bereit zu stellen.

Bevorzugte Ausführungsbeispiele der Erfindung werden im folgenden anhand der Zeichnungsfiguren erläutert.

Es zeigen:
- Figur 1:: schematisch ein Beispiel für die Architektur von zwei nebeneinander betriebenen Mobilfunknetzen nach dem Stand der Technik;
- Figur 2:: die prinzipielle Konfiguration bzw. Architektur von zwei Mobilfunksystemen mit gemeinsam genutztem Mobilfunkzugangsnetz gemäß der Erfindung;
- Figur 3:: ein Anwendungsbeispiel des systems gemäß Figur 2;
- Figur 4a:: Stand der Technik von MIB- und SIB1-Übertragung auf BCCH;
- Figur 4b:: Zusätzliche PLMN ids übertragen im MIB auf dem BCCH;
- Figur 4c:: Zusätzliche PLMN ids übertragen im SIB1;
- Figur 4d:: Zusätzliche PLMN ids übertragen im MIB und zusätzliche SIB1 pro PLMN;
- Figur 4e:: Zusätzliche PLMN ids übertragen im MIB und zusätzliche SIB1 pro PLMN für jedes unterstütze PLMN;
- Figur 4f:: Einführung komplett neuer MIBs und SIB1 für jedes unterstütze PLMN.

Die vorliegende Erfindung sieht eine prinzipielle Konfiguration bzw. Architektur des Mobilfunkzugangs- und Kernnetzes nach Figur 2 vor. Hierbei wird ein einziges gemeinsames Funkzugangsnetz 9, beispielsweise nach UMTS- oder GSM-Standard, mit zwei (oder mehr) Kernnetzen 6,7 verbunden und dem Mobilfunkteilnehmer die Dienste durch das Kernnetzwerk des jeweiligen ausgewählten Mobilfunkbetreibers zur Verfügung gestellt, wobei der Zugang zu diesem Kernnetz jedoch über das gemeinsam genutzte Funkzugangsnetz erfolgt, die Bedienung im Kernnetz jedoch getrennt. Nach dem Stand der Technik kann eine Architektur nach Figur 1 einem Mobilfunkteilnehmer nur die Dienste eines einzigen Mobilfunkanbieters bereitstellen, welches von dem benutzten Funkzugangsnetzwerk 5 oder 4 abhängig ist (über die Auswahl des Funkzugangsnetzes erfolgt die Auswahl des eigentlichen Mobilfunkbetreibers). Sollen die Dienste eines anderen Mobilfunkbetreibers genutzt werden, muss hierzu auch das entsprechende Funkzugangsnetz gewechselt werden, da ein Funkzugangsnetz 5 oder 4 nach dem Stand der Technik nur den Zugang zu genau einem Kernnetz 1 oder 2 des entsprechenden Betreibers erlaubt. In diesem Fall stehen einem Mobilfunkteilnehmer auch nur die PS- und die CS-Kernnetzelemente des einen Funkzugangsnetzbetreibers zur Verfügung.

Die Identität des Mobilfunkbetreibers wird heute durch die Aussendung einer sogenannten Betreiber-Kennung (Public Land Mobile Network Identity - PLMN id) auf einen Organisationskanal (Broadcast Control Channel - BCCH) allen potentiellen Mobilfunkteilnehmern im Empfangsbereich des Funkzugangsnetzwerkes mitgeteilt. Nach Aktivierung des Teilnehmerendgerätes (Mobilstation "MS" bei GSM, bzw. User Equipment "UE" bei UMTS), wählt dieses nach standardisierten Verfahren [z.B. 3GPP TS 22.011] das Mobilfunknetz aus, von welchem es Dienste zur Verfügung gestellt haben möchte. ("PLMN selection"). Grundlage dieser Mobilfunk-Betreiberauswahl ist die eindeutige Existenz der Kennung (PLMN id) auf dem BCCH jedes Mobilfunkzugangsnetzes. Nach dem Stand der Technik ist es nicht möglich, mehr als eine Mobilfunk-Netzbetreiber-Kennung (PLMN id) auf dem BCCH eines Mobilfunkzugangsnetzes auszustrahlen.

Das vorliegende erfindungsgemäße Verfahren ermöglicht es nunmehr, dem Mobilfunkteilnehmer bzw. im automatischen Modus [3GPP TS 23.122] dem Teilnehmerendgerät selbst, die Auswahl des Kernnetzes, und damit des gewünschten Mobilfunkbetreibers, basierend auf der Ausstrahlung weiterer PLMN ids auf dem BCCH des Funkzugangsnetzes festzülegen, ohne dafür das Funkzugangsnetz zu wechseln. Erfindungsgemäß sind mehrere Kernnetze sind mit einem Funkzugangsnetz verbunden.

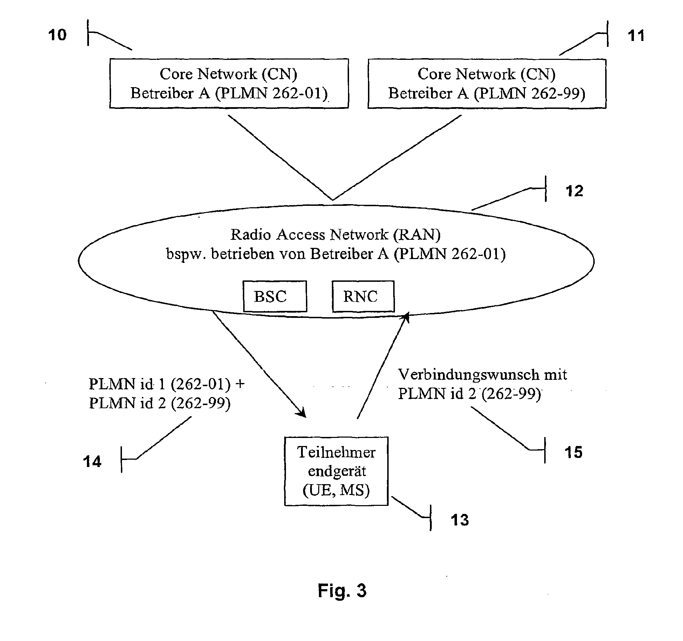

Dieses Prinzip ist das Grundprinzip des erfindungsgemäßen Verfahrens und in Figur 3 dargestellt.

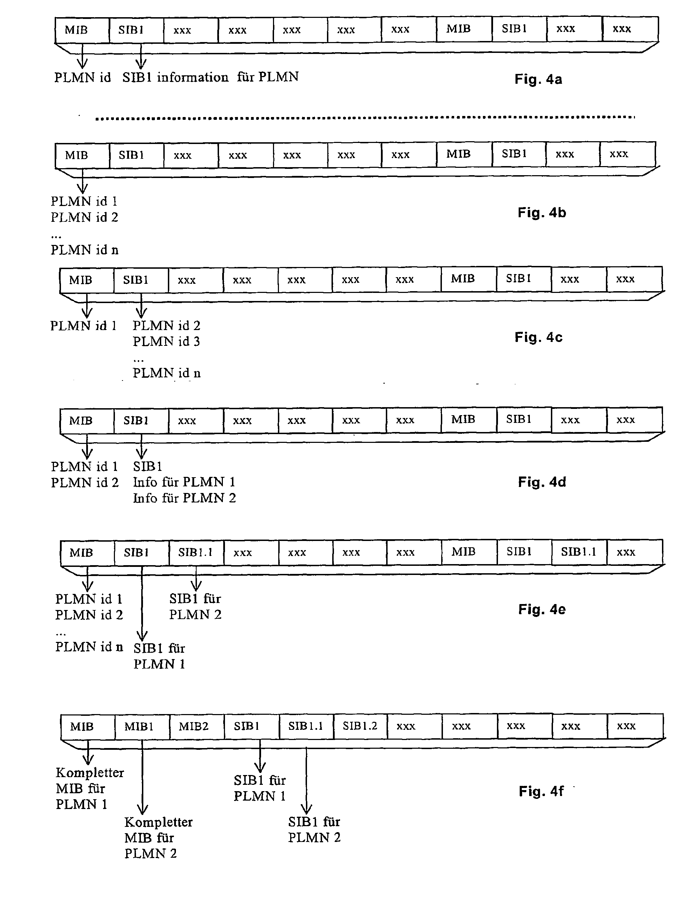

Die Ausstrahlung der PLMN Id 14 des Funkzugahgsnetzwerkes 12 und damit des Betreibers des Mobilfunksystems ist beispielsweise für ein System nach dem GSM-Standard in [3GPP TS 04.18] und für ein Mobilfunksystem nach UMTS-Standard in [3GPP TS 25.331] beschrieben..Beide Standards nutzen den Organisationskanal (BCCH) zur Abstrahlung dieser Informationen. Für ein Mobilfunksystem nach GSM-Standard erfolgt die Ausstrahlung der PLMN id im System Information type 3; für ein Mobilfunksystem nach UMTS-Standard im Master Information Block (MIB). Beiden Systemen gemeinsam ist, dass die Netzkennung (PLMN id) aus einer Folge von Ziffern (Digits) besteht, die das Format "abc-xyz" aufweisen. Hierbei bezeichnet "abc" den sogenannten Mobile Country Code (MCC), welcher dem Teilnehmerendgerät 13 mitteilt, um welches Land es sich handelt (beispielsweise "262" für Deutschland) und "xyz" den Mobile Network Code (MNC), welcher die Mobilfunkbetreiber innerhalb eines Landes unterscheidet (beispielsweise 01 für T-Mobile D in Deutschland). Hierbei kommen in verschiedenen Ländern MNC mit 2 oder 3 Digits vor. Gemeinsam ist Systemen nach UMTS- und GSM-Standard, dass die Ausstrahlung der PLMN-Kennung auf regelmäßiger Basis auf dem Organisationskanal BCCH wiederholt wird, damit Mobilfunkendgeräte 13 nicht unnötig lange warten müssen, bis die Information über die Identität des Mobilfunknetzes vorliegt. Beispielsweise wird der MIB nach dem UMTS-Standard alle 8 BCCH-Blöcke wiederholt (dargestellt in Figur 4a).

Nach [3GPP TS 25.331] ist der MIB für den BCCH folgendermaßen strukturiert:
MIB
   - >PLMN id
      - >MCC
      - >MNC
      I (andere Informationen)

Mit dieser Struktur lässt sich mit dem Stand der Technik [3GPP TS 25.331] nur eine einzige Mobilfunknetzkennung 14, also eine Kombination aus MCC & MNC, an das Teilnehmerendgerät 13 übertragen.

Vorgeschlagen wird als erfindungsgemäßes Verfahren, im MIB mehr als eine PLMN id zu übertragen, um hiermit die Möglichkeit zu schaffen, verschiedene Kernnetze 10,11 über ein gemeinsames Funkzugangsnetz 12 bekannt zu geben und somit erreichbar für ein Teilnehmerendgerät 13 zu machen.

Eine Struktur für den MIB nach dem erfindungsgemäßen Verfahren würde beispielsweise folgendermaßen aussehen:
I MIB
   - >PLMN id1
      - >MCC
      - >MNC
   - >PLMN id2
      - >MCC
      - >MSC
   - >PLMN id"n"
      - >MCC
      - >MNC
      (andere Informationen)

-Mit dieser Struktur des MIB auf dem Organisationskanal BCCH ist es möglich, jedem Teilnehmerendgerät innerhalb des Mobilfunkzugangsnetzes mehr als eine PLMN id mitzuteilen und damit zur Auswahl zu stellen (dargestellt in Figur 4b). Alternativ kann zur Bekanntgabe weiterer PLMN identities auch ein anderer System Information Block (SIB) des BCCH, beispielsweise der System Information Block 1 (SIB1) genutzt werden, wie es in Figur 4c dargestellt ist. Dieser wird üblicherweise für die Bekanntgabe von Kernnetz-Informationen benutzt [3GPP TS 25.331]. Hier kann prinzipiell ebenfalls eine Erweiterung um zusätzliche PLMN identities vorgenommen werden, indem die PLMN id 2, PLMN id 3, usw. im SIB1 übertragen werden. Weiterhin ist auch die Definition eines oder mehrerer zusätzlicher MIBs möglich, die sämtliche Informationen nach dem heutigen Verfahren für die jeweiligen zusätzlichen PLMNs beinhalten Figur 4f).

Weiterer wesentlicher Bestandteil des vorliegenden Verfahrens ist die Beibehaltung der Exklusivität des ausgewählten Mobilfunkbetreibers. In anderen Worten: ein Mobilfunkendgerät 13 muss aus der angebotenen Auswahl an Mobilfunkbetreibern einen auswählen, welcher die Dienste bereitstellen soll. Dieses hindert das Mobilfunkendgerät (oder den Nutzer) 13 nicht daran, den Mobilfunkbetreiber 10,11 zu wechseln, ohne jedoch das Funkzugangsnetz 12 an sich zu wechseln. Wesentlicher Nachteil des Standes der Technik ist außerdem die fehlende Möglichkeit, der Funkzugangs-Netz-Kontrolleinheit (bei UMTS: Radio Network Controller - RNC; bei GSM: Base Station Controller - BSC) mitzuteilen, mit welchem der möglichen Kernnetzwerke 10,11 ein Mobilfunkendgerät 13 verbunden werden möchte. Hierzu ist es notwendig dem RNC/BSC bei der Registrierung mitzuteilen, mit welchem der möglichen Kernnetzwerke (die hier dann gleichbedeutend mit Mobilfunkbetreibern sind) 10,11 die Registrierung erfolgen soll. Basierend auf der Auswahl des Teilnehmerendgerätes 13, baut der RNC/BSC die Verbindung (beispielsweise über das Iu-Interface 8 bei UMTS-Systemen) zum entsprechenden Kernnetz 10, 11 auf und dort erfolgt die Registrierung wie nach UMTS- bzw. GSM-Standard üblich.

Hierzu ist es notwendig, dass das Teilnehmerendgerät 13, wie vorstehend beschrieben, Kenntnis von der Existenz mehrerer Kernnetzwerke 10,11 bzw. Mobilfunkbetreiber innerhalb eines Funkzugangsnetzwerkes 12 bekommen hat und sich für die Registrierung in einem einzigen, basierend auf der PLMN identity, entschieden hat. Während der Registrierungsprozedur ist es deshalb notwendig, dass das Teilnehmerendgerät dem RNC/BSC mitteilt 15, für welchen der möglichen Mobilfunkbetreiber (basierend auf der PLMN id) 10,11 es sich entschieden hat. Hierzu sind eine Reihe von Realisierungsmöglichkeiten denkbar:
Zur Durchführung einer Registrierung eines Teilnehmerendgerätes 13 gegenüber einem Mobilfunknetz 10 oder 11 ist es notwendig, dass ein Teilnehmerendgerät 13 mit der Funkzugangsnetz-Kontrolleinheit (RNC/BSC) (in 12) in Verbindung tritt. Bei Mobilfunk-Systemen nach dem Stand der Technik ist es nicht notwendig, die Funkzugangsnetz-Kontrolleinheit (RNC/BSC) (in 12) über das gewählte PLMN 10 oder 11 in Kenntnis zu setzten, da es auf Seiten des Kernnetzes 10,11 nur eine Möglichkeit gibt, da das komplette Kernnetz vom Betreiber des Funkzugangsnetzwerkes betrieben wird. Anders verhält es sich bei dem erfindungsgemäßen Verfahren, da hier die Funkzugangsnetz-Kontrolleinheit (RNC/BSC) (in 12) zusätzlich informiert werden muss, zu welchem der Kernnetzelemente 10 oder 11 die Verbindung zwecks Registrierung aufgebaut werden muss.

In UMTS-Systemen erfolgt der Verbindungsaufbau von Seiten des Teilnehmerendgerätes 13 über eine RRC CONNECTION REQUEST Nachricht [3GPP TS 25.331]. Diese kann vorteilhafterweise zur Übertragung 15. der Kennung des ausgewählten PLMNs 10 oder 11, also des Mobilfunkbetreibers, vom Teilnehmerendgerät 13 zur Funkzugangsnetz-Kontrolleinheit (RNC/BSC) (in 12) genutzt werden. Hierzu ist es notwendig die Information über das gewählte PLMN in dieser oder einer anderen Nachricht zu übertragen 15. Die Übertragung kann beispielsweise in Form von MCC und MNC erfolgen. Ein einfacheres und Ressourcen sparendes Verfahren benutzt eine Indikation des gewählten PLMNs durch eine Referenzbeziehüng zur Ausstrahlung der zusätzlichen PLMNs auf dem BCCH. Hierzu ist beispielsweise eine Bitfolge von 3 Bits notwendig durch die 8 verschiedene PLMNs adressiert werden können. Die Referenz könnte sich in diesem Fall beispielsweise auf die Reihenfolge der Ausstrahlung der PLMN ids auf dem Organisationskanal BCCH beziehen. Werden beispielsweise drei PLMNs (PLMNO, PLMN1 und PLMN2) auf dem Organisationskanal BCCH ausgestrahlt, die das Funkzugangsnetz 12 gemeinsam nutzen, so würde eine Indikation der Bitfolge "010" bedeuten, dass das Teilnehmerendgerät 13 eine Verbindung zum PLMN2 wünscht. Die Unterstützung von bis zu 8 Kernnetzen (wie 10 oder 11) ist unter praktischen und betrieblichen Gesichtpunkten ausreichend. Das Verfahren kann nach dem gleichen Schema jedoch auch für jede beliebige Anzahl von zu unterstützenden Kernnetzwerken bzw. Mobilfunkanbietern vorteilhaft genutzt werden. Als weitere Alternativrealisierung kann auch ein einzelnes Bit zur Indikation des "default" Kernnetzes eingeführt werden, welches sich aus der IMSI ("International mobile subscriber identity" - int. Kennung für Mobilfunkteilnehmer) des Teilnehmerendgerätes direkt ableitet. Hierzu wäre die Signalisierungsmöglichkeit für ein Default ("ja" / "nein") in der Signalisierung vom Teilnehmerendgerät zum Mobilfunkzugangsnetz einzuführen, woraufhin der RNC die Verbindung mit dem Kernnetz bzw. Netzwerkbetreiber basierend auf der IMSI des Teilnehmerendgerätes herstellt. Die Kontrolle über die Benutzung der Default-Signalisierung oder der vollständigen Signalisierung des gewünschten Kernnetzes (Mobilfunkanbieters) kann beispielsweise über ein einzelnes Bit oder auch eine andere Realisierung auf dem Organisationskanal (BCCH) des Funkzugangsnetzes realisiert werden.

Weiterhin ermöglicht das erfindungsgemäße Verfahren die Bereitstellung von unterschiedlichen Kernnetz-Parametersätzen durch die Benutzung weiterer System Information Blocks 1 (SIB1) auf dem Organisationskanal BCCH eines Mobilfunknetzes. Diese Informationen enthalten beispielsweise Informationen die zur Kommunikation mit einem Kernnetz benötigt werden und können sich je nach Art des Kernnetzes unterscheiden. Hierzu ist die Einführung zusätzlicher SIB1 (z.B. SIB1.1, SIB1.2 etc oder SIB1bis, SIB1ter) auf dem BCCH notwendig, welche es ermöglichen, für jedes der unterstützten Kernnetze 10 oder 11 dem potentiellen Teilnehmerendgerät 13 über ein gemeinsames Funkzugangsnetz 12 einen eigenen Satz an zu verwendenden Kernnetz-Parametern (gegebenenfalls unterschiedliche) bereit zu stellen, wie in Figur 4e und auch 4f dargestellt. Basierend auf der Auswahl des Mobilfunkbetreibers aufgrund der im gemeinsamen Funkzugangsnetz 12 abgestrahlten PLMN id 14, liest das Teilnehmerendgerät 13 nur die jeweils benötigten Information für das gewählte PLMN aus dem entsprechenden SIB1 aus.

Eine Alternativrealisierung des erfindungsgemäßen Verfahrens basiert auf der dedizierten Bereitstellung einer oder mehrerer alternativer Mobilfunknetzbetreiberkennungen (PLMN ids) (wie 14). Hierbei wird nicht der Organisationskanal BCCH des Funkzugangsnetzes 12 zur Übermittlung weiterer PLMN ids genutzt, sondern die Information über weitere mögliche PLMNs dem Teilnehmerendgerät 13, beispielweise in einer der üblichen GSM oder UMTS Teilnehmerendgerät - Netz Kommunikations-Prozeduren, wie z.B. der Registrierungsprozedur, der "PDP context activation" oder der "Location Registration" Prozedur, mitgeteilt. Dieses neuartige erfindungsgemäße Verfahren hat den Vorteil, dass die Übermittlung der zusätzlichen Mobilfunkbetreiberkennungen für jedes einzelne Mobilfunkendgerät 13 getrennt vorgenommen werden kann und die entsprechenden Listen der möglichen Mobilfunknetzbetreiber pro Teilnehmerendgerät-Netz Beziehung bereit gestellt werden können.

Zur weiteren Nutzung dieser bereitgestellten Informationen über zusätzliche Mobilfunkbetreiber sind prinzipiell unterschiedliche Möglichkeiten vorhanden:
Beispielsweise kann einem Teilnehmerendgerät 13 auf diese Weise mitgeteilt werden, dass eine Gruppe von Mobilfunknetzwerken (PLMNs) als ein gemeinsames Netzwerk betrachtet werden kann. Dieses ermöglicht dem Teilnehmerendgerät 13 aufgrund von auf dem Organisationskanal BCCH abgestrahlten "cell reselection" Parametern, beispielsweise nach UMTS- oder GSM-Standard, zwischen verschiedenen Zellen eines Mobilfunksystems, hier zwischen Zellen in verschiedenen Funkzugängsnetzen, zu wechseln, als seien diese zu einem einzigen Mobilfunkzugangs- 4,5 bzw. Kernnetz 1,2 gehörig (Mobilfunkbetreiber).

Eine alternative Realisierung nutzt die dem Teilnehmerendgerät übermittelten Informationen in gleicher Weise wie oben beschrieben zur Auswahl und Übermittlung des Verbindungswunsches (Fig. 3). Hierbei würde die Information über den Verbindungswunsch, mit einem anderen Mobilfunknetzbetreiber gegenüber dem registrierten Mobilfunknetzbetreiber (aktueller Betreiber) signalisiert 15, und dieser würde über sein eigenes Funkzugangsnetz den Zugang zum Kernnetz eines anderen Mobilfunknetzbetreibers bereitstellen können. Alternativ können auch über den aktuell registrierten Mobilfunknetzbetreiber die Dienste erbracht werden, die Leistungen jedoch basierend auf dem übermittelten Verbindungswunsch abgerechnet werden (quasi eine Art "Call-by-Call" für Mobilfunkleistungen). Ähnliche Verfahren finden im Bereich der Festnetztelefonie heute bereits Anwendung, wobei die Auswahl des eigentlichen Kernnetzbetreibers durch die Übermittlung einer bestimmten "Vor-Vorwahl" durchgeführt wird.

Mit der Übermittlung der gewünschten Mobilfunknetzbetreiberkennung (PLMN id) nach einem der oben aufgeführten Verfahren kann beispielsweise die Funkzugangsnetz-Kontrolleinheit (RNC oder BSC) die entsprechenden Verbindungen zu einem der möglichen Kernnetze entsprechend der Auswahl bereitstellen oder diese Information im Gebührenerfassungssystem des Mobilfunkanbieters ausgewertet werden.

### Liste der Bezugszeichen

- 1: Kernnetz Betreiber A
- 2: Kernnetz Betreiber B
- 3: Schnittstelle (Iu- bzw. A-Schnittstelle)
- 4: Funkzugangsnetz Betreiber B
- 5: Funkzugangsnetz Betreiber A
- 6: Kernnetz Betreiber A
- 7: Kernnetz Betreiber B
- 8: Schnittstelle
- 9: Gemeinsames Funkzugangsnetz
- 10: Kernnetz Betreiber A
- 11: Kernnetz Betreiber B
- 12: Gemeinsames Funkzugangsnetz
- 13: Teilnehmerendgerät
- 14.: Übertragung PLMN id
- 15: Auswahl PLMN

## Patentansprüche

1. Verfahren zur Bereitstellung bzw. Teilung oder gemeinsamen Nutzung eines Mobilfunk-Funkzugangsnetzwerkes durch mehrere Mobilfunkanbieter, bei dem ein einziges Funkzugangsnetz (9; 12), beispielsweise nach UMTS-, cdma2000- oder GSM-Standard, durch mehrere Mobilfunkanbieter gemeinsam genutzt wird, **dadurch gekennzeichnet,**
**dass** zur Unterscheidung der Kernnetze (6,7; 10,11) der verschiedenen Mobilfunkanbieter die jeweilige Identität der Netzbetreiber, PLMN identity, im Funkzugangsnetzwerk, RAN oder BSS, dem Mobilfunkteilnehmer, UE oder MS, über die Aussendung von mehr als einer Mobilfunkbetreiberkennung, PLMN identity, auf einem gemeinsamen Organisationskanal, BCCH, bereitgestellt wird, wobei die Ausstrahlung von mehr als einer PLMN identity bei einem Mobilfunksystem nach UMTS-Standard in dem Master Information Block, MIB, und/oder dem System Information Block 1, SIB1, oder bei einem Mobilfunksystem nach GSM-Standard auf dem System Information Type 3, SI3, erfolgt, wobei der Teilnehmer / das Teilnehmerendgerät (13) bei Äußerung eines Verbindungswunsches gegenüber dem Funkzugangsnetzwerk (9; 12) durch Signalisierung einer PLMN identity, die aus der Mehrzahl der auf dem BCCH ausgesendeten PLMN identities ausgewählt wurde, mitteilt, mit welchem der unterschiedlichen Kernnetzwerke (6,7; 10,11) bzw. PLMNs der Verbindungsaufbau erfolgen soll, ohne das Funkzugangsnetzwerk (9; 12) zu wechseln.

2. Verfahren nach Anspruch 1, **dadurch gekennzeichnet, dass** zur Bereitstellung der Mobilfunkleistungen notwendigen Netzelemente eines Kernnetzes (6,7; 10,11), Core Network, beispielsweise MSC und/oder GSN, von jedem der Mobilfunkanbieter separat bereit gestellt werden.

3. Verfahren nach einem der Ansprüche 1-2, **dadurch gekennzeichnet, dass** Netzelemente des Kernnetzes (6,7; 10,11) , CN, beispielsweise zur Bereitstellung von Sprachverbindungen , MSC, gemeinsam genutzt werden, andere Netzelemente zur Bereitstellung von IP-Verbindungen, Packet Network, GSN, jeweils von unterschiedlichen Betreibern bereitgestellt werden.

4. Verfahren nach einem der Ansprüche 1-3, **dadurch gekennzeichnet, dass** die Ausstrahlung von mehr als einer PLMN identity in einem anderen System Information Block außer dem Master Information Block, MIB, oder dem System Information Block 1, SIB1, auf dem BCCH eines Mobilfunksystems nach UMTS-Standard erfolgt.

5. Verfahren nach einem der Ansprüche 1-4, **dadurch gekennzeichnet, dass** die Ausstrahlung von mehr als einer PLMN identity in einem anderen Block außer dem System Information type 3, SI3, auf dem BCCH eines Mobilfunksystems nach GSM-Standard erfolgt.

6. Verfahren nach einem der Ansprüche 1-5, **dadurch gekennzeichnet, dass** der Teilnehmer / das Teilnehmerendgerät (13) bei Äußerung des Verbindungswunsches gegenüber dem Funkzugangsnetzwerk (9; 12) mitteilt, mit welchem der unterschiedlichen Kernnetzwerke (6,7; 10,11) der Verbindungsaufbau erfolgen soll, und diese Mitteilung auf der Übersendung der PLMN identity in der RRC CONNECTION REQUEST oder der INITIAL DIRECT TRANSFER Nachricht in einem Mobilfunksystem nach UMTS-Standard erfolgt.

7. Verfahren nach einem der Ansprüche 1-6, **dadurch gekennzeichnet, dass** der Teilnehmer / das Teilnehmerendgerät (13) bei Äußerung des Verbindungswunsches gegenüber dem Funkzugangsnetzwerk (9; 12) mitteilt, mit welchem der unterschiedlichen Kernnetzwerke (6,7; 10,11) der Verbindungsaufbau erfolgen soll, und diese Mitteilung auf der Übersendung der PLMN identity in der RRC CONNECTION REQUEST oder der INITIAL DIRECT TRANSFER Nachricht in einem Mobilfunksystem nach UMTS-Standard erfolgt, wobei die PLMN identity als MCC+MNC angegeben wird.

8. Verfahren nach einem der Ansprüche 1-7, **dadurch gekennzeichnet, dass** der Teilnehmer /das Teilnehmerendgerät (13) bei Äußerung des Verbindungswunsches gegenüber dem Funkzugangsnetzwerk (9; 12) mitteilt, mit welchem der unterschiedlichen Kernnetzwerke (6,7; 10,11) der Verbindungsaufbau erfolgen soll, und diese Mitteilung auf der Übersendung der Netzbetreiberkennung, bspw. PLMN identity, in der RRC CONNECTION REQUEST oder der INITIAL DIRECT TRANSFER Nachricht in einem Mobilfunksystem nach UMTS-Standard erfolgt, wobei lediglich der MNC der PLMN identity übermittelt wird.

9. Verfahren nach einem der Ansprüche 1-8, **dadurch gekennzeichnet, dass** der Teilnehmer / das Teilnehmerendgerät (13) bei Äußerung des Verbindungswunsches gegenüber dem Funkzugangsnetzwerk (9; 12) mitteilt, mit welchem der unterschiedlichen Kernnetzwerke (6,7; 10,11) der Verbindungsaufbau erfolgen soll, und diese Mitteilung auf der Übersendung der Netzbetreiberkennung, bspw. PLMN identity, in der RRC CONNECTION REQUEST oder der INITIAL DIRECT TRANSFER Nachricht in einem Mobilfunksystem nach UMTS-Standard erfolgt, wobei die PLMN identity als Integer, 1, 2, 3,..., n, oder bitstring, z.B. "001", angegeben wird, und die Festlegung der eigentlichen PLMN identity aus der Reihenfolge des Sendens der unterschiedlichen PLMN identities auf dem BCCH abgeleitet wird.

10. Verfahren nach einem der Ansprüche 1-9, **dadurch gekennzeichnet, dass** der Teilnehmer / das Teilnehmerendgerät (13) bei Äußerung des Verbindungswunsches gegenüber dem Funkzugangsnetzwerk (9; 12) mitteilt, mit welchem der unterschiedlichen Kernnetzwerke (6,7; 10,11) der Verbindungsaufbau erfolgen soll, und diese Mitteilung auf der Übersendung der Netzbetreiberkennung, bspw. PLMN identity, weder in der RRC CONNECTION REQUEST noch in der INITIAL DIRECT TRANSFER Nachricht in einem Mobilfunksystem nach UMTS-Standard erfolgt.

11. Verfahren nach einem der Ansprüche 1-10, **dadurch gekennzeichnet, dass** die Ausstrahlung von mehr als einer PLMN identity in dem System Information Block 1, SIB1, auf dem BCCH eines Mobilfunksystems nach UMTS-Standard erfolgt oder innerhalb eines SIB1 Kernnetzinformationen von mehr als einem Kernnetz ausgestrahlt werden.

12. Verfahren nach einem der Ansprüche 1-11, **dadurch gekennzeichnet, dass** auf dem Organisationskanal, BCCH, des Funkzugangsnetzes(9; 12), beispielsweise über ein einzelnes Bit, signalisiert wird, ob die Funknetzressourcenverwaltungseinheit, RNC bzw. BSC, den Verbindungswunsch des Teilnehmers / des Teilnehmerendgerätes (13) mit einem der Kernnetze (6,7; 10, 11) basierend auf der IMSI des Teilnehmerendgerätes bereit stellt, "default" Auswahl aufgrund der Teilnehmer-IMSI.

13. Verfahren nach einem der Ansprüche 1-12, **dadurch gekennzeichnet, dass** auf dem Organisationskanal, BCCH, des Funkzugangsnetzes(9; 12), beispielsweise über ein einzelnes Bit, signalisiert wird, ob die Funknetzressourcenverwaltungseinheit, RNC bzw. BSC, den Verbindungswunsch des Teilnehmers mit einem der Kernnetze (6;7, 10,11) basierend auf der IMSI des Teilnehmerendgerätes (13) bereit stellt, "default" Auswahl aufgrund der Teilnehmer-IMSI, und die Auswahl der "default" Signalisierung aufgrund der IMSI oder die Übermittlung der Mobilfunknetzbetreiberkennung, bspw. PLMN identity, nach einem der vorstehenden Verfahren durch eine Signalisierung, bspw. ein Bit, auf dem Organisationskanal, BCCH, durchgeführt wird.

14. Verfahren nach einem der Ansprüche 1 bis 13, **dadurch gekennzeichnet, dass** einem Teilnehmerendgerät (13) in einem Mobilfunksystem nach UMTS- oder GSM-Standard mehr als eine Mobilfunknetzbetreiberkennung, PLMN identity, übermittelt wird.

15. Verfahren nach einem der Ansprüche 1 bis 14, **dadurch gekennzeichnet, dass** die Übermittlung weiterer Mobilfunknetzbetreiberkennungen, bspw. PLMN identities, und damit Netzbetreiber, welche das Teilnehmerendgerät (13) potentiell nutzen darf, auf einer dedizierten Signalisierung zwischen Funkzugangsnetz (9; 12) oder Kernnetz (6,7; 10,11) und Teilnehmerendgerät (13) erfolgt.

16. Verfahren nach einem der Ansprüche 1 bis 15, **dadurch gekennzeichnet, dass** die Übermittlung zusätzlicher PLMN identities immer dann durchgeführt wird, wenn sich ein Teilnehmerendgerät (13) bei einem Mobilfunknetz zwecks Registrierung anmeldet, einen Dienst aktuell nutzt , beispielsweise im Rahmen einer "PDP-Context Activation", oder seinen aktuellen Aufenthaltsort dem Mobilfunknetz gegenüber anzeigt, z.B. im Fall sich bewegender Teilnehmerendgeräte beispielsweise mittels Location Registration Prozeduren.

17. Verfahren nach einem der Ansprüche 1 bis 16, **dadurch gekennzeichnet, dass** die Übermittlung zusätzlicher möglicher Mobilfunknetzbetreiberkennungen dediziert pro Netz-Teilnehmerendgeräte-Beziehung oder aufgrund einer Ausstrahlung auf dem Organisationskanal BCCH erfolgt ist, und diese Informationen vom Teilnehmerendgerät (13) derart genutzt werden, dass eine Nutzung von Funkzugangsressourcen eines anderen Mobilfunkbetreibers möglich ist, als wären sie zum registrierten Mobilfunknetz zugehörig.

18. Verfahren nach einem der Ansprüche 1 bis 17, **dadurch gekennzeichnet, dass** die Übermittlung zusätzlicher möglicher Mobilfunknetzbetreiberkennungen dediziert pro Netz-Teilnehmerendgeräte-Beziehung erfolgt ist, und ein Teilnehmerendgerät (13) bei einem Verbindungswunsch über eines der Verfahren nach den Ansprüchen 1-23 der Funkzugangsnetz-Kontrolleinheit, RNC/BSC, die Netzbetreiberkennung, PLMN identity, übermittelt, und die Funkzugangsnetz-Kontrolleinheit , RNC/BSC, die entsprechenden Verbindungen zu dem gewünschten Kernnetz (6,7; 10,11) des Mobilfunknetzbetreibers bereitstellt.

19. Anordnung zum Betrieb von mehreren Mobilfunknetzen, unter Anwendung des Verfahrens zur Bereitstellung bzw. Teilung oder gemeinsamen Nutzung eines Mobilfunk-Funkzugangsnetzwerkes durch mehrere Mobilfunkanbieter gemäß den Ansprüchen 1 bis 18, **dadurch gekennzeichnet, dass** die Mobilfunknetze ein gemeinsames Funkzugangsnetz (9; 12) aber separate Kernnetze (6,7; 10,11) aufweisen, wobei für jedes Kernnetz (6, 7; 10, 11) eine eigene Mobilfunkbetreiberkennung, PLMN identity, auf einem gemeinsamen Organisationskanal, BCCH, bereitgestellt wird, und eine Auswahl des Mobilfunknetzes bzw. von Elementen , MSC oder GSN, der Kernnetze (6, 7; 10, 11) auf der Signalisierung der Auswahl durch das Teilnehmerendgerät (13) aufgrund der signalisierten PLMN Identity basiert.

20. Anordnung nach Anspruch 19, **dadurch gekennzeichnet, dass** mindestens eines der Mobilfunknetze ein Kernnetzelement, MSC oder GSN, für CS- und PS-Verbindungen sowie eine Funknetzkontrolleinheit, RNC oder BSC, enthält, wobei eine Funknetzkontrolleinheit, RNC oder BSC, mit mehr als jeweils einem Kernnetzelement für CS- und PS-Verbindungen verbunden ist.

21. Anordnung nach Anspruch 19 oder 20, **dadurch gekennzeichnet, dass** ein Funkzugangsnetzwerk, RAN, mit mehr als einem SGSN, für die PS domain, verbunden ist.

22. Anordnung nach Anspruch 19 oder 20, **dadurch gekennzeichnet, dass** ein Funkzugangsnetzwerk, RAN, mit mehr als einer MSC, für die CS domain, verbunden ist.

## Claims

1. Method for the provision or sharing or joint use of a mobile telephone radio access network by several mobile telephone providers, in which a single radio access network (9; 12) is used jointly by several mobile telephone providers, for example according to the UMTS, CDMA 2000 or GSM standard, **characterised in that**, to distinguish between the core networks (6, 7; 10, 11) of the different mobile telephone providers, the respective identity of the network operators, PLMN identity, in the radio access network, RAN or BSS, is provided to the mobile telephone subscriber, UE or MS, by the transmission of more than one mobile telephone operator code, PLMN identity, on a common organisation channel, BCCH, wherein the transmission of more than one PLMN identity in a mobile telephone system is effected according to the UMTS standard in the master information block, MIB, and/or the system information block 1, SIB1, or in a mobile telephone system according to the GSM standard on the system information type 3, SI3, wherein the subscriber/subscriber terminal (13), on expression of a connection request to the radio access network (9; 12), communicates, by signalling a PLMN identity which has been selected from the plurality of PLMN identities transmitted on the BCCH, with which of the different core networks (6, 7; 10, 11) or PLMNs the connection is to be made without changing the radio access network (9; 12).

2. Method according to claim 1, **characterised in that** network elements of a core network (6, 7; 10, 11), for example MSC and/or GSN, that are necessary to provide the mobile telephone power are provided separately by each of the mobile telephone providers.

3. Method according to one of claims 1-2, **characterised in that** network elements of the core network (6, 7; 10, 11), CN, are used jointly for example to provide speech connections, MSC, and other network elements are provided for the provision of IP connections, packet network, GSN, in each case by different operators.

4. Method according to one of claims 1-3, **characterised in that** the transmission of more than one PLMN identity in another system information block apart from the master information block, MIB, or system information block 1, SIB1, is effected on the BCCH of a mobile telephone system according to the UMTS standard.

5. Method according to one of claims 1-4, **characterised in that** the transmission of more than one PLMN identity in another block apart from the system information type 3, SI3, is effected on the BCCH of a mobile telephone system according to the GSM standard.

6. Method according to one of claims 1-5, **characterised in that** the subscriber/subscriber terminal (13), on expression of the connection request to the radio access network (9; 12), communicates with whichever of the different core networks (6, 7; 10, 11) the connection is to be made to, and this communication on transmission of the PLMN identity is effected in the RRC connection request or the initial direct transfer message in a mobile telephone system according to the UMTS standard.

7. Method according to one of claims 1-6, **characterised in that** the subscriber/subscriber terminal (13), on expression of the connection request to the radio access network (9; 12), communicates with whichever of the different core networks (6, 7; 10, 11) the connection is to be made to, and this communication on transmission of the PLMN identity is effected in the RRC connection request or the initial direct transfer message in a mobile telephone system according to the UMTS standard, the PLMN identity being given as MCC+MNC.

8. Method according to one of claims 1-7, **characterised in that** the subscriber/subscriber terminal (13), on expression of the connection request to the radio access network (9; 12), communicates with whichever of the different core networks (6, 7; 10, 11) the connection is to be made to, and this communication on transmission of the network operator code, for example PLMN identity, is effected in the RRC connection request or the initial direct transfer message in a mobile telephone system according to the UMTS standard, only the MNC of the PLMN identity being transmitted.

9. Method according to one of claims 1-8, **characterised in that** the subscriber/subscriber terminal (13), on expression of the connection request to the radio access network (9; 12), communicates with whichever of the different core networks (6, 7; 10, 11) the connection is to be made to, and this communication on transmission of the network operator code, for example PLMN identity, is effected in the RRC connection request or the initial direct transfer message in a mobile telephone system according to the UMTS standard, the PLMN identity being given as an integer, 1, 2, 3, ..., n, or bitstring, e.g. "001", and the specification of actual PLMN identity being derived from the sequence of transmission of the different PLMN identities on the BCCH.

10. Method according to one of claims 1-9, **characterised in that** the subscriber/subscriber terminal (13), on expression of the connection request to the radio access network (9; 12), communicates with whichever of the different core networks (6, 7; 10, 11) the connection is to be made to, and this communication on transmission of the network operator code, for example PLMN identity, is effected neither in the RRC connection request nor in the initial direct transfer message in a mobile telephone system according to the UMTS standard.

11. Method according to one of claims 1-10, **characterised in that** the transmission of more than one PLMN identity in the system information block 1, SIB1, is effected on the BCCH of a mobile telephone system according to the UMTS standard, or core network information is transmitted from more than one core network within a SIB1.

12. Method according to one of claims 1-11, **characterised in that** on the organisation channel, BCCH, of the radio access network (9; 12) it is signalled, for example via a single bit, whether the radio network resource management unit, RNC or BSC, meets the connection request of the subscriber/subscriber terminal (13) with one of the core networks (6, 7; 10, 11), based on the IMSI of the subscriber terminal, the "default" choice on the basis of the subscriber IMSI.

13. Method according to one of claims 1-12, **characterised in that** on the organisation channel, BCCH, of the radio access network (9; 12) it is signalled, for example via a single bit, whether the radio network resource management unit, RNC or BSC, meets the connection request of the subscriber with one of the core networks (6, 7; 10, 11), based on the IMSI of the subscriber terminal (13), the "default" choice on the basis of the subscriber IMSI, and the choice of "default" signalling on the basis of the IMSI or transmission of the mobile telephone network operator code, or PLMN identity, is carried out by one of the above methods by signalling, for example one bit, on the organisation channel, BCCH.

14. Method according to one of claims 1 to 13, **characterised in that** more than one mobile telephone network operator code, PLMN identity, is transmitted to a subscriber terminal (13) in a mobile telephone system according to the UMTS or GSM standard.

15. Method according to one of claims 1 to 14, **characterised in that** the transmission of further mobile telephone network operator codes, for example PLMN identities, and hence network operators which the subscriber terminal (13) may potentially use, is effected on dedicated signalling between radio access network (9; 12) or core network (6, 7; 10, 11) and subscriber terminal (13).

16. Method according to one of claims 1 to 15, **characterised in that** the transmission of additional PLMN identities is carried out whenever a subscriber terminal (13) logs on to a mobile telephone network for the purpose of registration, is currently using a service, for example within the scope of "PDP context activation", or indicates his current location to the mobile telephone network, e.g. in the case of moving subscriber terminals, for example by location registration procedures.

17. Method according to one of claims 1 to 16, **characterised in that** the transmission of additional possible mobile telephone network operator codes is effected in dedicated fashion for each network/subscriber terminal relationship or on the basis of transmission on the organisation channel BCCH, and this information is used by the subscriber terminal (13) in such a way that use of radio access resources of another mobile telephone operator is possible, as if they belonged to the registered mobile telephone network.

18. Method according to one of claims 1 to 17, **characterised in that** the transmission of additional possible mobile telephone network operator codes is effected in dedicated fashion for each network/subscriber terminal relationship, and a subscriber terminal (13) in case of a connection request transmits the network operator code, PLMN identity, by one of the methods according to claims 1-23 to the radio access network control unit, RNC/BSC, and the radio access network control unit, RNC/BSC, provides the corresponding connections to the desired core network (6, 7; 10, 11) of the mobile telephone network operator.

19. Arrangement for the operation of several mobile telephone networks, employing the method for the provision or sharing or joint use of a mobile telephone radio access network by several mobile telephone providers according to claims 1 to 18, **characterised in that** the mobile telephone networks have a joint radio access network (9; 12) but separate core networks (6, 7; 10, 11), wherein a separate mobile telephone operator code, PLMN identity, is provided for each core network (6, 7; 10, 11) on a joint organisation channel, BCCH, and a choice of mobile telephone network or of elements, MSC or GSN, of the core networks (6, 7; 10, 11) is based on signalling of the choice by the subscriber terminal (13) on the basis of the signalled PLMN identity.

20. Arrangement according to claim 19, **characterised in that** at least one of the mobile telephone networks includes a core network element, MSC or GSN, for CS and PS connections as well as a radio network control unit, RNC or BSC, wherein a radio network control unit, RNC or BSC, is connected to more than one core network element each for CS and PS connections.

21. Arrangement according to claim 19 or 20, **characterised in that** a radio access network, RAN, is connected to more than one SGSN, for the PS domain.

22. Arrangement according to claim 19 or 20, **characterised in that** a radio access network, RAN, is connected to more than one MSC, for the CS domain.

## Revendications

1. Procédé pour la mise à disposition ou le partage ou l'utilisation conjointe d'un réseau d'accès radio de téléphonie mobile par plusieurs fournisseurs de téléphonie mobile, selon lequel un seul réseau d'accès radio (9 ; 12), par exemple UMTS, cdma2000 ou GSM, est utilisé conjointement par plusieurs fournisseurs de téléphonie mobile,
**caractérisé en ce que** pour faire la distinction entre les réseaux centraux (6, 7 ; 10, 11) des différents fournisseurs de téléphonie mobile, l'identité de chaque opérateur de réseau, PLMN identity, dans le réseau d'accès radio, RAN ou BSS, est mise à la disposition de l'abonné mobile, UE ou MS, grâce à l'émission de plus d'une identification d'opérateur mobile, PLMN identity, sur un canal d'organisation commun, BCCH, l'émission de plus d'une PLMN identity se faisant dans le cas d'un système de téléphonie mobile UMTS dans le Master Information Block, MIB, et/ou dans le System Information Block. 1, SIB1, ou dans le cas d'un système de téléphonie mobile GSM sur le System Information Type 3, SI3, étant précisé que l'abonné/le terminal d'abonné (13), lorsqu'il exprime un souhait de communication auprès du réseau d'accès radio (9 ; 12) en signalant une identité PLMN qui a été sélectionnée parmi les PLMN identities émises sur le BCCH, annonce avec lequel des différents réseaux centraux (6, 7 ; 10, 11) ou PLMN l'établissement de la communication doit se faire sans changer de réseau d'accès radio (9 ; 12).

2. Procédé selon la revendication 1, **caractérisé en ce que** pour la mise à disposition des services de téléphonie mobile nécessaires, des éléments de réseau d'un réseau central (6, 7 ; 10, 11), Core Network, par exemple MSC et/ou GSN, sont mis à disposition séparément par chacun des fournisseurs de téléphonie mobile.

3. Procédé selon l'une des revendications 1 à 2, **caractérisé en ce que** des éléments de réseau du réseau central (6, 7 ; 10, 11), CN, sont utilisés conjointement par exemple pour la mise à disposition de communications vocales, MSC, d'autres éléments de réseau sont mis à disposition par différents opérateurs pour la mise à disposition de communications IP, Packet Network, GSN.

4. Procédé selon l'une des revendications 1 à 3, **caractérisé en ce que** l'émission de plus d'une PLMN identity dans un autre System Information Block se fait en dehors du Master Information Block, MIB, ou du Système Information Block 1, SIB1, sur le BCCH d'un système de téléphonie mobile UMTS.

5. Procédé selon l'une des revendications 1 à 4, **caractérisé en ce que** l'émission de plus d'une PLMN identity dans un autre bloc se fait en dehors du System Information type 3, SI3, sur le BCCH d'un système de téléphonie mobile GSM.

6. Procédé selon l'une des revendications 1 à 5, **caractérisé en ce que** l'abonné/le terminal d'abonné (13), lorsqu'il exprime le souhait de communication auprès du réseau d'accès radio (9 ; 12), annonce avec lequel des différents réseaux généraux (6, 7 ; 10, 11) l'établissement de la communication doit se faire, et cette annonce est transmise avec l'envoi de la PLMN identity dans le message RRC CONNECTION REQUEST ou dans le message INITIAL DIRECT TRANSFER dans un système de téléphonie mobile UMTS.

7. Procédé selon l'une des revendications 1 à 6, **caractérisé en ce que** l'abonné/le terminal d'abonné (13), lorsqu'il exprime le souhait de communication auprès du réseau d'accès radio (9 ; 12), annonce avec lequel des différents réseaux généraux (6, 7 ; 10, 11) l'établissement de la communication doit se faire, et cette annonce se fait avec l'envoi de la PLMN identity dans le message RRC CONNECTION REQUEST ou dans le message INITIAL DIRECT TRANSFER dans un système de téléphonie mobile UMTS, l'identité PLMN étant indiquée sous la forme MCC+MNC.

8. Procédé selon l'une des revendications 1 à 7, **caractérisé en ce que** l'abonné/le terminal d'abonné (13), lorsqu'il exprime le souhait de communication auprès du réseau d'accès radio (9 ; 12), annonce avec lequel des différents réseaux généraux (6, 7 ; 10, 11) l'établissement de la communication doit se faire, et cette annonce se fait avec l'envoi de l'identification d'opérateur de réseau, par exemple PLMN identity, dans le message RRC CONNECTION REQUEST ou dans le message INITIAL DIRECT TRANSFER dans un système de téléphonie mobile UMTS, seul le MNC de la PLMN identity étant transmis.

9. Procédé selon l'une des revendications 1 à 8, **caractérisé en ce que** l'abonné/le terminal d'abonné (13), lorsqu'il exprime le souhait de communication auprès du réseau d'accès radio (9 ; 12), annonce avec lequel des différents réseaux généraux (6, 7 ; 10, 11) l'établissement de la communication doit se faire, et cette annonce se fait avec l'envoi de l'identification d'opérateur de réseau, par exemple PLMN identity, dans le message RRC CONNECTION REQUEST ou dans le message INITIAL DIRECT TRANSFER dans un système de téléphonie mobile UMTS, l'identité PLMN étant indiquée sous la forme d'un nombre entier, 1, 2, 3,..., n, ou d'une chaîne binaire, par exemple "001", et la PLMN identity proprement dite est fixée à partir de l'ordre des envois des différentes PLMN identities sur le BCCH.

10. Procédé selon l'une des revendications 1 à 9, **caractérisé en ce que** l'abonné/le terminal d'abonné (13), lorsqu'il exprime le souhait de communication auprès du réseau d'accès radio (9 ; 12), annonce avec lequel des différents réseaux généraux (6, 7 ; 10, 11) l'établissement de la communication doit se faire, et cette annonce se fait avec l'envoi de l'identification d'opérateur de réseau, par exemple PLMN identity, ni dans le message RRC CONNECTION REQUEST ni dans le message INITIAL DIRECT TRANSFER dans un système de téléphonie mobile UMTS.

11. Procédé selon l'une des revendications 1 à 10, **caractérisé en ce que** l'émission de plus d'une PLMN identity dans le System Information Block 1, SIB1, se fait sur le BCCH d'un système de téléphonie mobile UMTS, ou à l'intérieur d'un SIB1 des informations de réseau général de plus d'un réseau général sont émises.

12. Procédé selon l'une des revendications 1 à 11, **caractérisé en ce que** sur le canal d'organisation, BCCH, du réseau d'accès radio (9 ; 12), il est signalé par exemple par l'intermédiaire d'un bit individuel si l'unité de gestion de ressources de réseau radio, RNC ou BSC, fournit le souhait de communication de l'abonné/du terminal d'abonné (13) avec l'un des réseaux généraux (6, 7 ; 10, 11) sur la base de l'IMSI du terminal d'abonné, sélection "default" sur la base de l'IMSI d'abonné.

13. Procédé selon l'une des revendications 1 à 12, **caractérisé en ce que** sur le canal d'organisation, BCCH, du réseau d'accès radio (9 ; 12), il est signalé par exemple par l'intermédiaire d'un bit individuel si l'unité de gestion de ressources de réseau radio, RNC ou BSC, fournit le souhait de communication de l'abonné avec l'un des réseaux généraux (6, 7 ; 10, 11) sur la base de l'IMSI du terminal d'abonné (13), sélection "default" sur la base de l'IMSI d'abonné, et la sélection de la signalisation "default" est effectuée sur la base de l'IMSI, ou la transmission de l'identification d'opérateur mobile, par exemple PLMN identity, est effectuée selon l'un des procédés précédents grâce à une signalisation, par exemple un bit, sur le canal d'organisation, BCCH.

14. Procédé selon l'une des revendications 1 à 13, **caractérisé en ce que** plus d'une identification d'opérateur mobile, PLMN identity, est transmise à un terminal d'abonné (13) dans un système de téléphonie mobile UMTS ou GSM.

15. Procédé selon l'une des revendications 1 à 14, **caractérisé en ce que** la transmission d'autres identifications d'opérateur mobile, par exemple PLMN identities, et donc d'autres opérateurs de réseau que le terminal d'abonné (13) est autorisé potentiellement à utiliser, se fait sur une signalisation spécialisée entre le réseau d'accès radio (9 ; 12) ou le réseau général (6, 7 ; 10, 11) et le terminal d'abonné (13).

16. Procédé selon l'une des revendications 1 à 15, **caractérisé en ce que** la transmission de PLMN identities supplémentaires est toujours effectuée lorsqu'un terminal d'abonné (13) entre en communication avec un réseau mobile en vue d'un enregistrement, utilise actuellement un service, par exemple dans le cadre d'une "PDP-Context Activation", ou indique sa position actuelle au réseau mobile, par exemple dans le cas de terminaux d'abonné qui se déplacent, par exemple à l'aide de procédures d'enregistrement de localisation.

17. Procédé selon l'une des revendications 1 à 16, **caractérisé en ce que** la transmission d'identifications d'opérateur mobile possibles supplémentaires se fait de manière spécialisée pour chaque relation réseau-terminaux d'abonné ou sur la base d'une émission sur le canal d'organisation BCCH, et ces informations sont utilisées par le terminal d'abonné (13) de telle sorte qu'une utilisation de ressources d'accès radio d'un autre opérateur mobile soit possible comme si elles appartenaient au réseau mobile enregistré.

18. Procédé selon l'une des revendications 1 à 17, **caractérisé en ce que** la transmission d'identifications d'opérateur mobile possibles supplémentaires se fait de manière spécialisée pour chaque relation réseau-terminaux d'abonné, et un terminal d'abonné (13), dans le cas d'un souhait de communication, transmet l'identification d'opérateur de réseau, PLMN identity, à l'unité de contrôle de réseau d'accès radio, RNC/BSC, grâce à l'un des procédés selon les revendications 1 à 23, et l'unité de contrôle de réseau d'accès radio, RNC/BSC, fournit les communications correspondantes avec le réseau général (6, 7 ; 10, 11) souhaité de l'opérateur mobile.

19. Dispositif pour exploiter plusieurs réseaux de téléphonie mobile en utilisant le procédé pour la mise à disposition ou le partage ou l'utilisation conjointe d'un réseau d'accès radio de téléphonie mobile par plusieurs fournisseurs de téléphonie mobile, selon les revendications 1 à 18, **caractérisé en ce que** les réseaux de téléphonie mobile comportent un réseau d'accès radio (9 ; 12) commun mais des réseaux généraux (6, 7 ; 10, 11) séparés, étant précisé que pour chaque réseau général (6, 7 ; 10, 11) une identification propre d'opérateur mobile, PLMN identity, est mise à disposition sur un canal d'organisation, BCCH, commun et qu'une sélection du réseau de téléphonie mobile ou d'éléments, MSC ou GSN, des réseaux généraux (6, 7, ; 10, 11) est basée sur la signalisation de la sélection par le terminal d'abonné (13) à partir de la PLMN Identity signalée.

20. Dispositif selon la revendication 19, **caractérisé en ce que** l'un au moins des réseaux de téléphonie mobile contient un élément de réseau général, MSC ou GSN, pour des communications CS et PS ainsi qu'une unité de contrôle de réseau radio, RNC ou BSC, une unité de contrôle de réseau radio, RNC ou BSC, étant reliée à plus d'un élément de réseau général pour des communications CS et PS.

21. Dispositif selon la revendication 19 ou 20, **caractérisé en ce qu'**un réseau d'accès radio, RAN, est relié à plus d'un SGSN, pour le domaine PS.

22. Dispositif selon la revendication 19 ou 20, **caractérisé en ce qu'**un réseau d'accès radio, RAN, est relié à plus d'un MSC, pour le domaine CS.
